# EUROPEAN PATENT APPLICATION

(11) **EP 2 100 719 A1**
(43) Date of publication of application: **16.09.2009**
(21) Application number: 09003444.8
(22) Date of filing: 10.03.2009
(51) Int. Cl.: B29C 70/00

(54) **Carbon fibre composite material, product and method**

(30) Priority: 12.03.2008 CN 200810007781
(71) Applicant: BYD Company Limited, Shenzhen 518118 (CN)
(72) Inventor: Sun, Jigang, Longgang 518118 Shenzhen (CN); Chen, Suli, Longgang 518118 Shenzhen (CN); Zhang, Jiaxin, Longgang 518118 Shenzhen (CN); Chang, Mingzhu, Longgang 518118 Shenzhen (CN); Guo, Hongzhi, Longgang 518118 Shenzhen (CN)
(74) Representative: Bulling, Alexander

(57) **Abstract**

Provided a carbon fiber composite material, comprising a plurality of carbon fiber layers, each layer having a first set of carbon fibers aligned substantially parallel to the long axis of the fibers; and a resin covering at least a portion of the carbon fiber layers; wherein the carbon fiber layers are stacked and laminated together; and at least two layers are disposed so that the first set fibers in the two layers have a relative angle of about 5-90° with each other. Also provided a product comprising the carbon fiber composite material and a method for preparing the same.

## Description

The present application claims priority to Chinese Patent Application No. 200810007781.1, filed March 12, 2008, the entirety of which is hereby incorporated by reference.

The present disclosure relates to a carbon fiber composite material, a product comprising the same, and a method for preparing the same.

Carbon fiber is a common industry material. Carbon fiber has the advantages of light weight, high strength, high modulus, high temperature resistance (up to 2000 °C), high corrosion resistance, anti-fatigue and so on. As the carbon fiber composite material has excellent physical and chemical properties, it is widely used in the fields of aerospace industries, aviation industries, transportation and sports equipments, civil constructions, firefighting equipments, and so on. Furthermore, electromagnetic shielding, anti static and other properties of carbon fiber extend its application in the field of electronic appliances. However, at present, the application in the field of electronic appliances is limited in the housing of portable computers. Processing technologies are still under investigation.

Carbon fiber composite material is typically a combination of carbon fibers and a matrix (eg. resin, metal, ceramic and so on). Generally, carbon fiber clothes and a resin (eg. epoxy resin, phenol formaldehyde resin and so on) are hot-pressing molded to provide a carbon fiber composite material. The method of manufacturing the product made of carbon fiber composite material usually comprises the steps of: soaking the multiple layers of carbon fiber clothes in the resin, stacking the carbon fiber clothes in a hot press mould, flatting the carbon fiber clothes, and hot-press molding the multiple layers of carbon fiber clothes to form a half-finished product. Then the half-finished product is further treated to provide a smooth surface. In general, certain gaps and pores form when the fibers are knitted into a carbon fiber cloth. When the multiple layers of carbon fiber clothes are stacked together, the overlap of the pores from different layers may produce concave holes on the surface, which may cause uneven distribution of the resin. Therefore, to obtain a uniform and firm coating layer on the surface of the half-finished product, it is necessary to treat the surface of the product before spraying the coating material. The treating step is usually to fill the concave holes on the surface of the half-finished product with suitable materials. For example, liquid resin can be applied on the surface of the half-finished product by brushing or spraying. Then the resin is solidified by heating. After treatment, the surface of the half-finished product should be polished with a water proof abrasive paper. The treatment and polishing should be performed several times according to the smooth degree of the half-finished product. As a result, in the known method of manufacturing the product made of carbon fiber composite material, treatment and polishing on the surface of half-finished product are necessary steps.

One embodiment of the present application relates to a carbon fiber composite material comprising a plurality of carbon fiber layers, each layer having a first set of carbon fibers aligned substantially parallel to the long axis of the fibers; and a resin covering at least a portion of the carbon fiber layers; wherein the carbon fiber layers are stacked and laminated together; and at least two layers are disposed so that the first set fibers in the two layers have a relative angle of about 5-90° with each other.

The other embodiment of the present application relates to a product comprising a carbon fiber composite material, wherein the carbon fiber composite material comprises: a plurality of carbon fiber layers, each layer having a first set of carbon fibers aligned substantially parallel to the long axis of the fibers; and a resin covering at least a portion of the carbon fiber layers; wherein the carbon fiber layers are stacked and laminated together; and at least two layers are disposed so that the first set fibers in the two layers are in a relative angle of about 5-90° with each other.

Another embodiment of the present application relates to a method for preparing a product, comprising: applying a resin onto at least a portion of a plurality of carbon fiber layers; stacking the carbon fiber layers with each other; wherein each layer has a first set of carbon fibers aligned substantially parallel to the long axis of the fibers; and at least two layers are disposed so that the first set fibers in the two layers are in a relative angle of about 5-90° with each other; and laminating the carbon fiber layers to form a product.

Fig. 1 is a view showing the structure of a unidirectional carbon fiber cloth 110a. Carbon fibers 111 are aligned parallel to the long axis of the fiber. The lines 112 are the gaps between the fibers. The direction of the long axis of the fibers is assigned as direction P.

Fig. 2 is an exploded view showing the structure of various layers in one embodiment of the invention. Each layer is a unidirectional carbon fiber cloth 110a. Each layer is arranged in a certain direction. P1, P2, P3, P4, P5, and P6 are the direction of the long axis of the fibers in each layer, respectively.

Fig. 3 is a top view of the embodiment in Fig. 2. The lines 112 are the gaps between the fibers in each layer.

Fig. 4 is a view showing the structure of a cross-knitted carbon fiber cloth 110b. Carbon fibers 111 and carbon fibers 112 are perpendicular to each other. The lines 112 are the gaps between the fibers. The direction of the long axis of the fibers 111 is assigned as direction P. The gaps cross each other forming pores, shown as open circles in the figure.

Fig. 5 is an exploded view showing the structure of two layers in one embodiment of the invention. Each layer is a cross-knitted carbon fiber cloth 110b. The pores 1121 in the top layer are shown as open circles. The pores 1122 in the bottom layer are shown as solid circles. P1 and P2 are the direction of the fibers 111 in each layer, respectively.

Fig. 6 is a top view of the embodiment in Fig. 5.

Fig. 7 is a view of the enlarged portion A in Fig. 6. The pores 1121 and the pores 1122 are from the top layer and the bottom layer, respectively.

Fig. 8 is a perspective view of the housing for a mobile phone in one embodiment of the invention. Part 1 is the main portion of the housing. Part 2 is the snap joints.

Fig. 9 is a top view of the housing for a mobile phone in one embodiment of the invention. The pattern shows a visual effect of carbon fiber.

Fig.10 is a cross sectional view of the housing in Fig. 8. Part 11 is the carbon fiber composite material. Layer 12 is the coating. Part 13 is a sticky interior surface including the snap joints (the snap joints are not shown in the Fig). Layer 14 is a layer of hot melt adhesives.

The present disclosure provides a carbon fiber composite material comprising a carbon fiber and a resin.

Any suitable carbon fiber can be used in the present disclosure. Examples are unidirectional carbon fiber cloth, cross-knitted carbon fiber cloth, and other carbon fiber clothes with various knitting patterns.

The resin can be any suitable resin. The examples include phenol formaldehyde resin, epoxy resin and the like. The preferred example is epoxy resin, such as bisphenol-F epoxy resin.

In one embodiment, the carbon fiber composite material comprises a plurality of carbon fiber layers and a resin. Each layer has a plurality of carbon fibers aligned substantially parallel to the long axis of the fiber. There are gaps between the fibers. The carbon fiber layers are covered with the resin. The covered carbon fiber layers are stacked and laminated together. The fibers of at least two layers are in a staggered pattern. Therefore, at least some gaps in different layers are not overlapped. The resin may be distributed evenly to provide a smooth surface of the product.

Preferably, the fibers of at least two layers have a relative angle of about 5-90° with each other. More preferably, the angle is about 45°.

Preferably, the fibers of the adjacent layers have a relative angle of about 5-90° with each other. Preferably, the angles of the fibers between any adjacent layers are substantially the same.

In another embodiment, the carbon fiber composite material comprises a plurality of carbon fiber layers and a resin. Each layer has a first set of carbon fibers aligned substantially parallel to the long axis of the first set fibers, and a second set of carbon fibers aligned substantially parallel to the long axis of the second set fibers. The fibers of the first set and the second set are perpendicular to each other. The fibers of the first set and the second set cross each other. The first set of gaps between the first set of fibers and the second set of gaps between the second set of fibers also cross each other, forming pores. The resin is disposed between the carbon fiber layers. The carbon fiber layers and the resin are laminated together. The long axis of the first set fibers is assigned as the direction of the layer. The directions of at least two layers have a relative angle of about 5-45° with each other. Therefore, at least some pores from different layers are not overlapped. The concave holes on the surface may be prevented. The resin may be distributed evenly to provide a smooth surface of the product. The product can be coated without further treatment or polishing.

Preferably, the angle is about 45°.

Preferably, the directions of the adjacent layers have a relative angle of about 5-45° with each other.

Preferably, the angles of the directions between any adjacent layers are substantially the same.

In lamination process (eg. hot-pressing), the carbon fiber layer and resin will expand because of the heat. The different expansive degrees would cause distortion of the material. When the fiber layers are in a staggered pattern, preferably, with a similar angles of the directions between adjacent layers, at least part of the internal stresses may counteract each other. Thus the distortion of the product may be reduced. The staggered angle can be selected according to the specific condition, such as about 5°-90°. Preferably, the staggered angle is about 45°, so that the better isotropy will be achieved.

The present disclosure also provides a product comprising a carbon fiber composite material of the present disclosure.

The product of the present disclosure can further comprise a coating. The coating can be any suitable coating material known in the art. Preferably, the coating materials are transparent, providing a visual effect of brightness for the product. The coating can enhance the mechanical strength of the surface of the product. The coating may include a bottom layer and a top layer. The bottom layer can fill the concave holes produced in hot-pressing. The bottom layer can also increase the adhesion of the top layer to the product. The material of the top layer can be the same as the bottom layer. Also a different material can be used in the top layer. The coating can be a material with high rigidity, so that the product can have a relatively hard surface. For example, the bottom layer can be epoxy resin paint, polyurethane paint, phenol formaldehyde resin paint, or the like. The top layer can be polyurethane paint, acrylic paint, or the like.

The product comprising carbon fiber composite material can be plates, housings for electronic devices, parts of devices or other products. The product can be prepared in a certain way according to the size and the structure. For example, a product with a small size and complex structure can be prepared by precision injection molding. An example is a housing for mobile phones. The housing includes the main portion and snap joints. The housing can be assembled with the main body of the mobile phone by the snap joints. The housing can further comprise a sticky interior surface. The shape of the interior surface matches the shape of the main body of the mobile phone, so that the adhesive area may be enlarged, and the main body may be held firmly in the housing.

The present disclosure provides a method for preparing a product comprising a carbon fiber composite material. The method comprises: applying a resin onto a plurality of carbon fiber layers; stacking the pretreated carbon fiber layers with each other; and laminating the carbon fiber layers and the resin to form a product. The carbon fiber layers are arranged as disclosed in the present disclosure.

Any suitable carbon fiber can be used in the present disclosure. Examples are unidirectional carbon fiber cloth, cross-knitted carbon fiber cloth, and other carbon fiber clothes with various knitting patterns.

The resin can be any suitable resin. The examples include phenol formaldehyde resin, epoxy resin and the like. The preferred example is epoxy resin.

In one embodiment, a unidirectional carbon fiber cloth is used. Each layer has a plurality of carbon fibers aligned substantially parallel to the long axis of the fiber. The fibers of at least two layers are in a staggered pattern. Preferably, the fibers of at least two layers have a relative angle of about 5-90° with each other. More preferably, the angle is about 45°. Preferably, the fibers of the adjacent layers are in different directions. Preferably, the angles of the fibers between any adjacent layers are substantially the same.

In another embodiment, a cross-knitted carbon fiber cloth is used. Each layer has a first set of carbon fibers aligned substantially parallel to the long axis of the first set fibers, and a second set of carbon fibers aligned substantially parallel to the long axis of the second set fibers. The fibers of the first set and the second set are perpendicular to each other. The fibers of the first set and the second set cross each other. The long axis of the first set fibers is assigned as the direction of the layer.

The directions of at least two layers have a relative angle of about 5-45° with each other. Preferably, the angle is about 45°. Preferably, the directions of the adjacent layers have a relative angle of about 5-45° with each other. Preferably, the angles of the directions between any adjacent layers are substantially the same.

The method for applying the resin to the carbon fiber can be any suitable methods. The examples include soaking, brushing, and spraying. Preferably, the carbon fiber cloth is soaked in the resin.

The laminating can be performed in any suitable machine. For example, a hot-pressing mould is used.

The method can further comprise a step of flatting the carbon fiber cloth.

The method can further comprising a step of coating. The coating material can be any suitable coating material known in the art. Preferably, the coating materials are transparent, providing a visual effect of brightness for the product. The coating can enhance the mechanical strength of the surface of the product. The coating may include coating a bottom layer and coating a top layer. The bottom layer can fill the concave holes produced in hot-pressing. The bottom layer can also increase the adhesion of the top layer to the product. The material of the top layer can be the same as the bottom layer. A different material can be used in the top layer. The coating can be a material with high rigidity, so that the product can have a relatively hard surface. For example, the bottom layer can be epoxy resin paint, polyurethane paint, phenol formaldehyde resin paint, or the like. The top layer can be polyurethane paint, acrylic paint, or the like.

### Examples

### Example 1

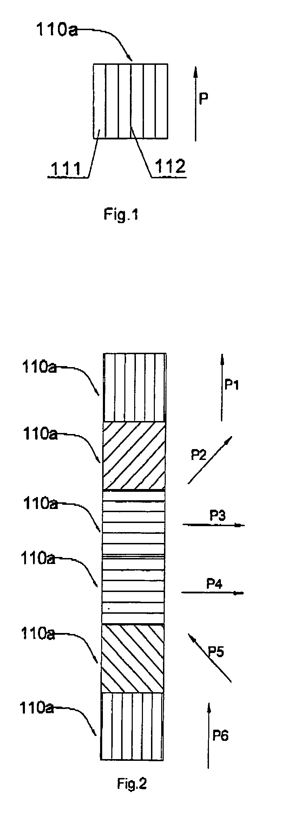

Referring to Figs. 1-3, one embodiment comprises six layers of unidirectional carbon fiber clothes 110a and a resin. As shown in Fig. 1, the carbon fiber cloth has a plurality of carbon fibers 111 aligned substantially parallel to the long axis of the fiber. The gaps 112 form between the fibers. The direction of the long axis of the fibers is assigned as direction P. In Fig. 2, six layers of the carbon fiber clothes were stacked together. Each layer was a unidirectional carbon fiber cloth 110a. Each layer was arranged with the fibers in a certain direction. P1, P2, P3, P4, P5, and P6 are the direction of the long axis of the fibers in each layer, respectively. The angles between P1 and P2, P2 and P3, P4 and P5, and P5 and P6 are about 45°.

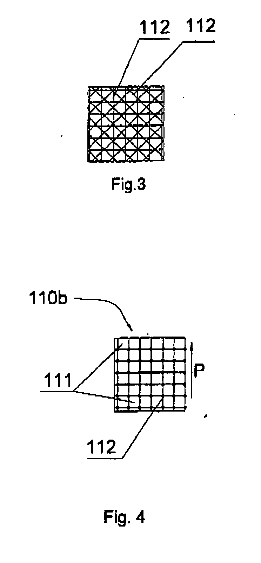

In Fig. 3 shows the gaps 112 from different layers are not overlapped.

### Example 2

Referring to Figs. 4-7, one preferred embodiment comprises two layers of cross-knitted carbon fiber clothes 110b and a resin. The structure of a cross-knitted carbon fiber cloth 110b is shown in the Fig. 4. Carbon fibers 111 and carbon fibers 112 are perpendicular to each other. The lines 112 are the gaps between the fibers. The direction of the long axis of the fibers 111 is assigned as the direction of the layer (P). The gaps cross with each other forming pores, shown as open circles in the figure.

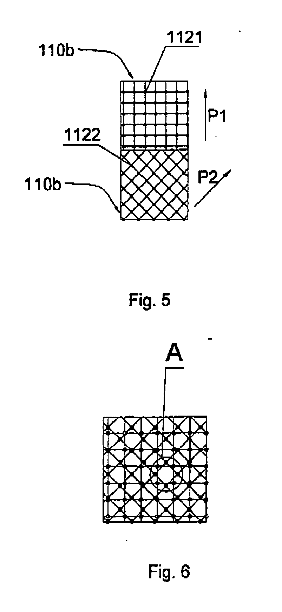

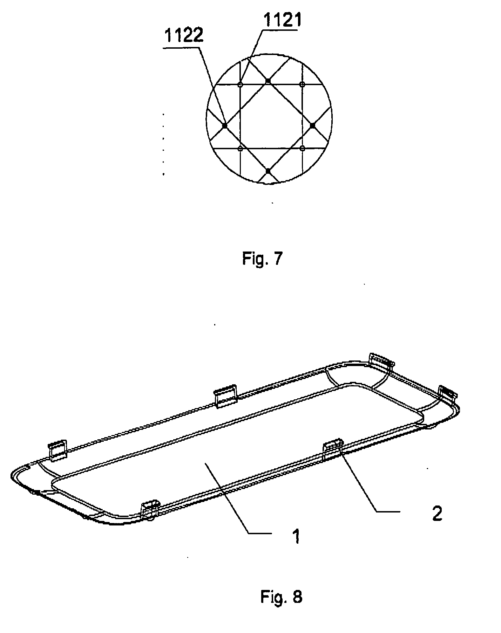

Fig. 5 shows the embodiment. Each layer is a cross-knitted carbon fiber cloth 110b. The pores 1121 in the top layer are shown as open circles. The pores 1122 in the bottom layer are shown as solid circles. P1 and P2 are the direction of the fibers 111 in each layer, respectively. P1 and P2 have a relative angle of about 45°. Figs. 6 and 7 show the pores from the two layers are not overlapped.

### Example 3

The example illustrates a process to prepare a housing for mobile phones.

The housing of the mobile phones is shown in Fig. 8. Part 1 is the main portion of the housing. Part 2 is the snap joints.

Carbon fiber clothes were soaked in the resin to provide a presoaked carbon fiber clothes. The presoaked carbon fiber clothes were cut into a predetermined shape and size. Then the fiber clothes were placed and flatted in a hot-pressing mould. The fibers of each layer were in a staggered pattern. The hot-pressing mould was closed and a certain temperature and pressure were applied. For example, the temperature and pressure can be controlled at about 100 °C and 3 MPa. The fiber clothes were solidified and cooled. The half-finished housing was tailored according to the predetermined shape and size. Then a paint was sprayed on the exterior surface of the half-finished housing. The paint was heated to form a bottom layer. The bottom layer was polished. Then another paint was sprayed on the bottom layer to form a top layer. The top layer was solidified by UV irradiation in an UV curing machine for 2-4 seconds.

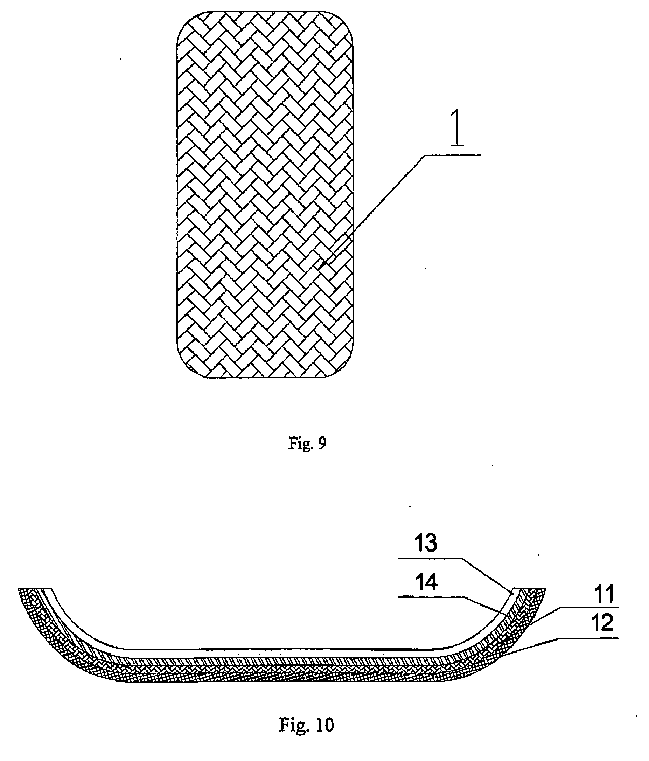

The part 13 in Fig. 10 was formed by precision injection molding with polycarbonate (PC). The part 13 included the snap joints. Then the part 13 was applied to the inner surface of the half-finished housing by using a hot melt adhesive. The hot melt adhesive was heated to about 80 °C-130 °C. The adhesive formed a layer 14 in Fig. 10. A housing for a mobile phone was obtained.

Many modifications and other embodiments of the present disclosure will come to mind to one skilled in the art to which the present disclosure pertains having the benefit of the teachings presented in the foregoing description. It will be apparent to those skilled in the art that variations and modifications of the present disclosure can be made without departing from the scope or spirit of the present disclosure. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A carbon fiber composite material comprising:
a plurality of carbon fiber layers, each layer having a first set of carbon fibers aligned substantially parallel to the long axis of the fibers; and
a resin covering at least a portion of the carbon fiber layers;
wherein the carbon fiber layers are stacked and laminated together; and at least two layers are disposed so that the first set fibers in the two layers have a relative angle of about 5-90°, preferably about 45° with each other.

2. The material of claim 1, wherein angles between the first set fibers in adjacent layers are substantially the same.

3. The material of claims 1 or 2, wherein the resin is selected from the group consisting of epoxy resin, phenol formaldehyde resin, and combinations thereof.

4. The material of any one of claims 1 to 3, wherein the at least one layer, preferably each layer of carbon fiber comprises a second set of carbon fibers aligned substantially parallel to the long axis of the fibers; and wherein the fibers of the first set and the second set cross each other.

5. A product comprising a carbon fiber composite material, wherein the carbon fiber composite material comprises:
a plurality of carbon fiber layers, each layer having a first set of carbon fibers aligned substantially parallel to the long axis of the fibers; and
a resin covering at least a portion of the carbon fiber layers;
wherein the carbon fiber layers are stacked and laminated together; and at least two layers are disposed so that the first set fibers in the two layers are in a relative angle of about 5-90° with each other.

6. The product of claim 5, wherein the at least one layer of carbon fiber comprises a second set of carbon fibers aligned substantially parallel to the long axis of the fibers; and wherein the fibers of the first set and the second set cross each other.

7. The product of claims 5 or 6, further comprising a coating.

8. The product of any one of claims 5 to 7, wherein the coating comprises a top layer and a bottom layer.

9. The product of any one of claims 5 to 8, wherein the coating is selected from the group consisting of epoxy resin paint, polyurethane paint, phenol formaldehyde resin paint, acrylic paint, and combinations thereof.

10. The product of any one of claims 5 to 9, wherein the product is a housing for an electronic device, preferably a housing for a mobile phone.

11. A method for preparing a product:
applying a resin onto at least a portion of a plurality of carbon fiber layers;
stacking the carbon fiber layers with each other;
wherein each layer has a first set of carbon fibers aligned substantially parallel to the long axis of the fibers; and at least two layers are disposed so that the first set fibers in the two layers are in a relative angle of about 5-90°, preferably about 45° with each other; and
laminating the carbon fiber layers to form a product.

12. The method of claim 11, wherein angles between the first set fibers in adjacent layers are substantially the same.

13. The method of claim 11 or 12, wherein the resin is selected from the group consisting of epoxy resin, phenol formaldehyde resin and combinations thereof.

14. The method of any one of claims 11 to 13, further comprising a step of :
applying a coating material on the product.

15. The method of any one of claims 11 to 14, wherein the applying comprises:
applying a bottom layer of the coating on the product;
applying a top layer of the coating on the bottom layer; and
optionally polishing the bottom layer of the coating.
